# DEMANDE DE BREVET EUROPEEN

(11) **EP 2 711 618 A1**
(43) Date de publication de la demande: **26.03.2014**
(21) Numéro de dépôt: 13184060.5
(22) Date de dépôt: 12.09.2013
(51) Int. Cl.: F21V 8/00, F21S 8/10, G02B 6/00

(54) **Dispositif d'éclairage et/ou de signalisation notamment pour véhicule automobile**

(30) Priorité: 25.09.2012 FR 1258994
(71) Demandeur: VALEO VISION, 93012 Bobigny Cedex (FR)
(72) Inventeur: De Lamberterie, Antoine, 75019 PARIS (FR); Dubosc, Christophe, 93250 VILLEMOMBLE (FR); Sagna, Boubacar, 78500 SARTROUVILLE (FR); Jin, Hui, 75014 PARIS (FR)

(57) **Abrégé**

La présente invention concerne un dispositif d'éclairage et/ou de signalisation (1), notamment pour véhicule automobile, comprenant une source lumineuse (S) configurée pour émettre un faisceau lumineux, un guide d'orientation (3) du faisceau de lumière provenant de la source lumineuse (S), un guide de répartition (5) apte à répartir la lumière issue dudit guide d'orientation (3) en dehors du dispositif (1), ledit dispositif (1) étant configuré pour que le guide d'orientation (3) émette une première partie (11) du faisceau dans le guide de répartition (5), et une deuxième partie (12) du faisceau en dehors du guide de répartition (5).

Selon l'invention, les guides d'orientation (3) et de répartition (5) sont dans le prolongement optique l'un de l'autre et font un angle.

## Description

La présente invention concerne un dispositif d'éclairage et/ou de signalisation, notamment pour véhicule automobile. Elle est en particulier destinée aux feux de position, clignotant ou feux stop.

Dans ce domaine, il est connu d'utiliser des dispositifs de signalisation munis d'une source lumineuse, en général une pluralité de diodes électroluminescentes, et un guide de lumière à travers lequel se propage un faisceau lumineux issu de la source. La lumière se propage dans le guide par réflexion totale jusqu'à une face de sortie, qui projette la lumière dans l'axe du véhicule, de façon à être vu par les véhicules qui le suivent ou le précèdent.

Dans le domaine automobile, de tels dispositifs sont appréciés car ils permettent de proposer une grande variété de forme et de lumière. Or, on sait que les constructeurs souhaitent se singulariser, notamment avec des éléments visuellement originaux, afin d'être identifiables plus facilement par rapport aux concurrents. Cependant, un inconvénient de ces dispositifs est d'être trop directif. Ainsi, dès que l'observateur s'écarte angulairement de l'axe optique, la lumière n'est rapidement plus perçue.

Dans la demande de brevet EP 1 434 000, il a déjà été proposé des dispositifs, dont le guide comporte des foyers optiques disposés sur une face, afin de faire diffuser la lumière et constituer un écran de découplage ou de répartition de lumière. Les foyers optiques diffusent autour d'eux, une quantité sensiblement égale de lumière dans toutes les directions, et donnent ainsi un aspect lumineux à toute la surface du feu. Le résultat obtenu est un angle élargi de perception de la lumière émise et effet visuel apportant un caractère esthétique particulier.

Cependant, ces écrans de découplage ou de répartition de lumière munis de foyers optiques n'ont pas un rendement optique optimal en terme de luminosité. Les foyers renvoient vers l'extérieur du guide une lumière trop faible, ne répondant pas aux critères exigés.

Aussi, pour obtenir un éclairage associant efficacité lumineuse et caractère esthétique, on pourrait envisager de faire fonctionner simultanément deux guides différents, l'un produisant une lumière directe, et l'autre une lumière diffusée ou répartie. Néanmoins, les dispositifs doivent garder un encombrement réduit et une consommation électrique limitée. Ce n'est pas le cas si on doit juxtaposer deux dispositifs autonomes.

L'invention vise donc, à obtenir un éclairage combinant une lumière directe et une lumière diffusée ou répartie dans un dispositif unique.

Pour cela, le dispositif d'éclairage et/ou de signalisation, notamment pour véhicule automobile, comprend une source lumineuse configurée pour émettre un faisceau lumineux, un guide d'orientation du faisceau de lumière provenant de la source lumineuse, un guide de répartition apte à répartir la lumière issue dudit guide d'orientation en dehors du dispositif, ledit dispositif étant configuré pour que le guide d'orientation émette une première partie du faisceau dans le guide de répartition, et une deuxième partie du faisceau en dehors du guide de répartition.

Selon l'invention, les guides d'orientation et de répartition sont dans le prolongement optique l'un de l'autre et font un angle.

On dispose ainsi, avec un seul et même dispositif, d'un faisceau émis présentant une intensité lumineuse élevée et un cône de perception agrandi. La même source lumineuse servant à la fois pour l'éclairage direct et pour l'éclairage réparti, la consommation électrique nécessaire à l'utilisation du dispositif est limitée. Le dispositif unique évite une superposition complexe de plusieurs éléments séparés sur le véhicule concerné et permet de gagner de la place.

Ce dispositif apporte de la sorte, une solution compacte et économe en énergie. En outre, l'association d'un faisceau réparti et d'un faisceau direct allie l'aspect esthétique à l'efficacité lumineuse afin de répondre aux normes de luminosité en vigueur.

Selon différents modes de réalisation de l'invention, qui pourront être pris ensemble ou séparément :
- le guide d'orientation et ledit guide de répartition sont en continuité de matière l'un de l'autre ;
- ledit guide d'orientation comprend une face de sortie configurée pour émettre lesdites première et deuxième parties du faisceau et une face d'entrée du guide de répartition correspond à une partie de ladite face de sortie ;
- ledit guide d'orientation comprend une partie intermédiaire raccordant le guide d'orientation au guide de répartition et présentant ladite face de sortie ;
- la partie intermédiaire est un cylindre dont le profil de section a un premier côté convexe et un deuxième côté en forme de prisme s'élargissant, puis d'arc en ellipse, ledit premier côté dirigeant ladite première partie du faisceau vers ladite face d'entrée du guide de répartition et/ou le deuxième côté permettant l'émission de la deuxième partie du faisceau en dehors du dispositif ;
- ledit guide d'orientation comprend une face d'entrée des rayons lumineux et/ou un bord arrière de forme courbe convexe, ledit bord arrière étant configuré pour réfléchir lesdits rayons lumineux issus de la face d'entrée, vers la face de sortie ;
- ledit bord arrière a une forme parabolique ;
- ladite source lumineuse est une diode électroluminescente disposée sensiblement sur ladite face d'entrée ;
- le guide d'orientation est muni d'un axe optique, ledit guide d'orientation étant apte à diriger lesdits rayons lumineux émis par la source lumineuse dans un plan sensiblement parallèle au dit axe optique ;
- le guide de répartition comprend une face de répartition munie d'une pluralité de motifs ;
- le guide de répartition comprend une face de sortie des rayons répartis par ladite face de répartition ;
- les motifs sont des altérations superficielles de la face de répartition
- les motifs sont des éléments de surfaces réfléchissantes formés sur la face de répartition, obtenus par moulage ou par usinage.
- les guides d'orientation et de répartition sont des guides surfaciques, formant une nappe.

L'invention sera mieux comprise à la lumière de la description suivante qui n'est donnée qu'à titre indicatif et qui n'a pas pour but de la limiter, accompagnée des dessins joints :
- la Figure 1 illustrant de façon schématique, une vue de côté d'un dispositif d'éclairage ou de signalisation selon l'invention, représenté avec le trajet des rayons lumineux,
- la Figure 2 illustrant de façon schématique, une vue en perspective d'un dispositif d'éclairage ou de signalisation selon l'invention,
- la Figure 3 illustrant de façon schématique, une vue de dessus d'un dispositif d'éclairage ou de signalisation selon l'invention, représenté avec le trajet des rayons lumineux,
- la Figure 4 illustrant de façon schématique, une vue en perspective, du guide d'orientation selon l'invention.

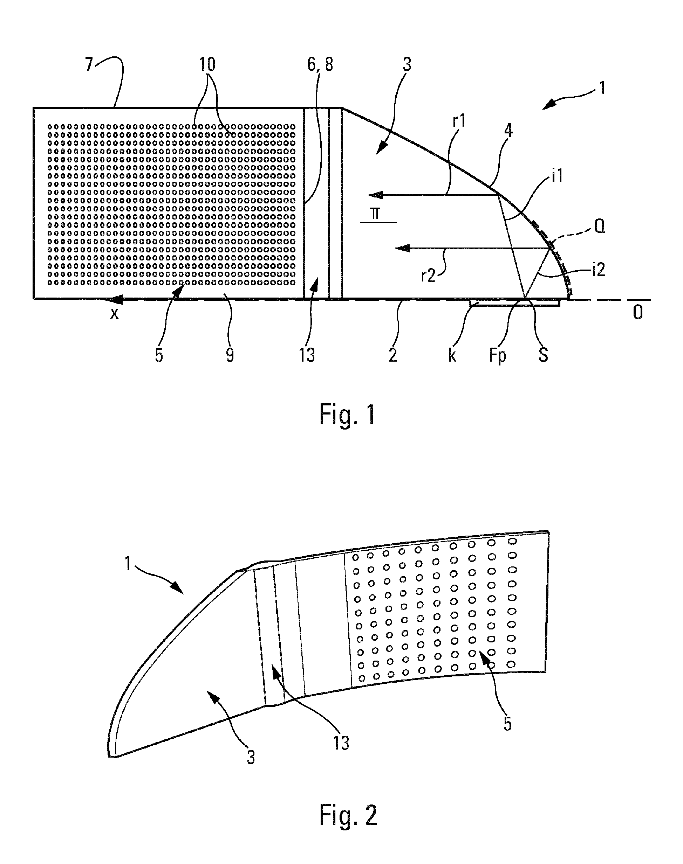

Comme illustré à la Figure 1, l'invention concerne un dispositif d'éclairage et/ou de signalisation 1 comprenant une source lumineuse S configurée pour émettre des rayons lumineux. Ici, ladite source lumineuse S comprend une et une seule diode électroluminescente disposée sur un support k de type PCB, en particulier un support de type substrat métallique isolé.

La diode est agencée sur une face d'entrée 2 d'un guide d'orientation 3 de la lumière, de sorte que lesdits rayons lumineux émis pénètrent à l'intérieur dudit guide d'orientation 3 par cette face d'entrée 2. Le guide d'orientation 3 est configuré pour diriger les rayons vers une face de sortie 8, en les orientant de façon sensiblement parallèle à un plan π horizontal.

Le guide d'orientation 3 est, par exemple, un guide surfacique plat, formant une nappe comprise entre deux grandes faces parallèles délimitées par un contour à trois côtés, respectivement un côté correspondant à la face d'entrée 2, un côté correspondant à la face de sortie 8 et un bord arrière 4 courbe convexe. La face de sortie 8 s'étend transversalement à la face d'entrée 2 qui a pour largeur l'épaisseur entre les deux grandes faces parallèles du guide 3. Le bord arrière 4 s'étend entre les extrémités non confondues de la face d'entrée 2 et de la face de sortie 8.

La nappe a une épaisseur constante correspondant à la largeur de la face d'entrée 2.

Comme le montre la Figure 1, la face d'entrée 2 est plane et horizontale, la nappe constituant le guide d'orientation 3 est verticale, et la face de sortie 8 est plane et orthogonale à la face d'entrée 2, c'est-à-dire qu'elle est verticale.

Dans l'exemple considéré, la forme courbe du bord arrière 4 est associée au profil de la face de sortie 8 pour que les rayons lumineux sortants du guide d'orientation 3 aient une direction sensiblement parallèle à un plan horizontal π.

Le bord arrière 4 est formé par une portion de cylindre parabolique, dont l'axe de symétrie Ox est parallèle au plan horizontal π et est, dans cet exemple, parallèle à la grande dimension de la face d'entrée 2. Le foyer Fp de la parabole résultant de la section du bord arrière 4 par un plan vertical médian entre les faces du guide d'orientation 3 est situé dans la partie arrière de la face d'entrée 2. Le centre, ou un autre point, de la source S est placé au foyer Fp de la parabole.

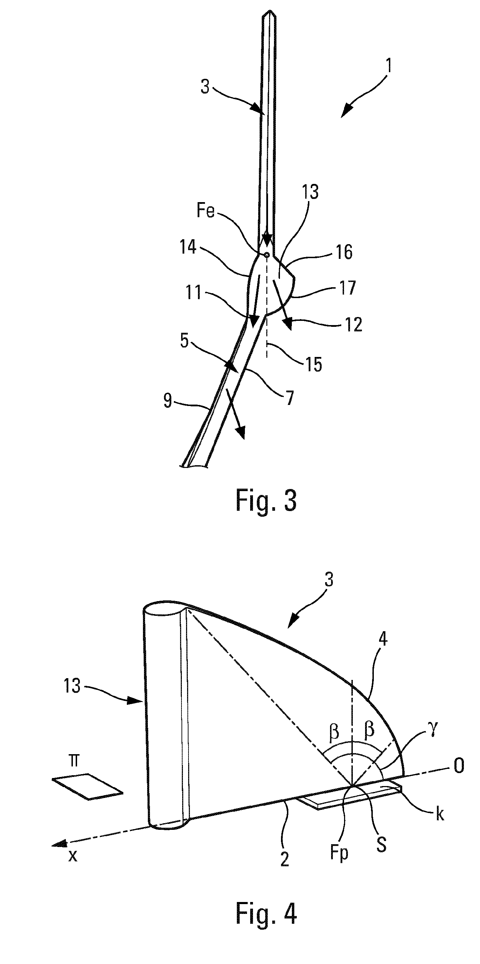

Tel que montré sur la Figure 4, la diode S émet un faisceau lumineux selon un diagramme d'émission Lambertien, c'est-à-dire un faisceau présentant une demi-ouverture β d'environ 40°, en référence à l'axe de symétrie de la diode S, la demi-ouverture étant définie pour une intensité minimale d'au moins 50% de l'intensité maximale émise par la diode S.

La géométrie du bord arrière 4 est choisie de telle sorte que l'angle γ sous lequel ce bord arrière 4 est vu depuis la source lumineuse S s'étend de part et d'autre de la normale à la source lumineuse S de manière à recouvrir l'ouverture 2 β de la source S, afin de récupérer un maximum du flux lumineux issu de la source S.

La totalité des rayons émis par la source lumineuse S entrant dans le guide d'orientation 3 est réfléchie dans une direction sensiblement parallèle au plan π, ainsi que cela est représenté sur la Figure 1.

Un rayon i1 émis par la source S et incliné vers l'avant par rapport à la normale à la source, présente en général un angle d'incidence sur le bord arrière 4 supérieur à l'angle limite de réflexion totale, de sorte que ce rayon est réfléchi, et ceci selon un rayon r1 parallèle au plan π.

Un rayon i2 émis par la source S vers l'arrière présente généralement un angle d'incidence inférieur à l'angle limite de réflexion totale. Pour favoriser la réflexion, la zone inférieure Q de la tranche arrière pourra être revêtue d'une couche réfléchissante, en particulier cette zone est aluminée. Le rayon i2 est alors réfléchi suivant un rayon r2 parallèle au plan π.

On assure ainsi une collimation (c'est-à-dire la génération d'un faisceau de rayons parallèles) suivant la direction de l'axe optique, dans le plan vertical.

Grâce audit guide d'orientation 3, il suffit de disposer d'une seule diode pour obtenir des résultats significatifs en terme d'intensité lumineuse. Un tel mode de mise en oeuvre est donc particulièrement avantageux comparé au dispositif décrit dans le brevet précédemment mentionné, qui fonctionne avec une multitude de diodes électroluminescentes disposées sur une tranche du guide.

Le dispositif 1 comprend en outre un guide de répartition 5 de la lumière apte à transmettre une partie desdits rayons lumineux issus du guide d'orientation 3 et à répartir tout ou partie desdits rayons en dehors du guide de répartition 5. Ledit guide de répartition 5 comprend une face d'entrée 6 des rayons provenant du guide d'orientation et une face de sortie 7 des rayons répartis par une face de répartition 9. A cet effet, les guides d'orientation 3 et de répartition 5 sont en partie dans le prolongement optique l'un de l'autre, afin de faciliter le passage des rayons lumineux.

De manière avantageuse, le guide d'orientation 3 et le guide de répartition 5 sont en continuité de matière l'un de l'autre, de sorte que l'interface entre les deux guides ne provoque pas de perte de lumière.

Avantageusement, les guides d'orientation 3 et de répartition 5 sont des guides surfaciques, ils forment ensemble une nappe, de forme longitudinale rectiligne ou courbée, selon les besoins d'utilisation du dispositif 1. De tels dispositifs 1 sont particulièrement intéressants car ils peuvent être agencés de multiples manières, dans un minimum de place. Il est ainsi possible de donner aux guides des formes originales.

Comme cela ressort des figues 2 et 3, lesdits guides d'orientation 3 et de répartition 5 forment ici un angle, par exemple compris entre 0 et 45°.

De préférence, ladite face de répartition 9 comporte une pluralité de motifs 10. Les motifs 10 sont par exemple des foyers de diffusion, obtenus par altérations de la face de répartition 9, par exemple des impacts laser. Les motifs 10 peuvent également être constitués d'éléments de surfaces réfléchissantes, par exemple des faces de micro-prismes formés sur la face de répartition 9, obtenues par moulage ou par usinage.

Ces motifs 10 vont avoir pour fonction première de dévier les rayons lumineux qui sont susceptibles de se propager dans l'épaisseur du guide de répartition 5 par une succession de réflexions totales. Quand une partie au moins de ces rayons lumineux frappent les motifs 10, les rayons en question sont réémis, par diffusion ou par réflexion, au moins en partie, selon de multiples directions. Pour l'observateur, tout va alors se passer comme si ces motifs 10 étaient eux même des sources lumineuses. Ces motifs 10 sont formés en creux ou en relief sur la surface polie optique de la face de répartition 9. Chaque motif 10 se comporte alors comme une source optique secondaire. On peut ensuite avoir toutes sortes de répartition de ces motifs en fonction de l'effet recherché.

Les dimensions de ces motifs sont telles qu'ils ont une surface apparente de 0,1 à 1 ou 2 mm², ils ont des profondeurs variables de quelques dixièmes de millimètres à un ou deux millimètres, leur forme peut être évolutive, notamment de ronde à rectangulaire, leur état de surface est diffusant ou réfléchissant. Leur répartition peut être homogène, régulière ou évolutive selon une direction donnée.

Comme le montre la Figure 3, le guide d'orientation 3 émet une première partie 11 du faisceau dans le guide de répartition 5, et une deuxième partie 12 du faisceau en dehors du guide de répartition 5. Ainsi, la première partie 11 du faisceau entre dans le guide de répartition 5 afin d'être répartie avec un angle d'ouverture large pour obtenir l'effet esthétique souhaité, alors que la deuxième partie 12 du faisceau éclaire directement l'extérieur, avec un faisceau dont l'angle d'ouverture est petit, afin d'avoir une luminosité efficace avec une intensité élevée.

Plus précisément, c'est le positionnement relatif du guide d'orientation 3 par rapport au guide de répartition 5 qui permet de séparer le faisceau en deux parties 11, 12. En particulier, grâce à l'angle formé entre le guide d'orientation 3 et le guide de répartition 5, il est plus facile de dévier la première partie 11 du faisceau dans le guide de répartition 5, et la deuxième partie 12 du faisceau en dehors du guide de répartition 5.

Avantageusement, pour séparer le faisceau en deux, ledit guide d'orientation 3 comprend une partie intermédiaire 13 raccordant le guide d'orientation 3 au guide de répartition 5. La partie intermédiaire 13 est un cylindre à génératrices rectilignes orthogonales à la face d'entrée 2 du guide d'orientation 3, et donc verticales dans l'exemple considéré. Son profil de section a un premier côté 14 convexe et un deuxième côté en forme de prisme 16 s'élargissant, puis d'arc 17 en ellipse. Le premier côté 14 dirige la première partie 11 du faisceau vers la face d'entrée du guide de répartition 5, alors que le deuxième côté laisse la deuxième partie 12 du faisceau sortir en dehors du dispositif 1 par la face dont le profil est l'arc 17 d'ellipse. Dans ce cas, le profil de la face de sortie du guide d'orientation 3 est défini par l'arc 17 d'ellipse et l'interface entre les guides d'orientation 3 et de répartition 5, qui est la face d'entrée du guide de répartition 5.

La forme de prisme 16 s'élargissant permet d'arrêter toute réflexion sur les flancs, et la forme en ellipse oriente les rayons du faisceau pour concentrer la lumière dans une direction. L'ellipse définit une lentille dont le foyer Fe est situé au milieu de l'entrée de la partie intermédiaire 13. Ainsi, tout rayon situé dans un plan horizontal et passant par le foyer arrière Fe de l'arc 17 d'ellipse sort parallèlement à l'axe optique du guide d'orientation 3. Ce profil permet une collimation partielle des rayons sortants dans le plan horizontal afin de favoriser l'émission d'un faisceau de forte intensité.

Autrement dit, le faisceau de lumière entre dans le guide d'orientation 3 qui conduit un faisceau collimaté dans la partie intermédiaire 13. Comme cela est représenté sur la Figure 3, on définit un plan de séparation 15 disposé selon l'axe optique du guide d'orientation 3 et passant par le foyer Fe de l'ellipse ; il divise la partie intermédiaire 13 en deux. La partie du faisceau 11 qui se propage du côté convexe est principalement orientée dans le guide de répartition 5, alors que la deuxième partie 12 du faisceau se propageant du côté du prisme, sort en dehors du guide d'orientation 3 par la face elliptique.

La face de sortie 7 du guide de répartition 5 est située, par exemple, en vis-à-vis de la zone d'émission de la première partie 11 du faisceau, sortant du guide d'orientation 3, tandis que la face de répartition 9 est située à l'opposée. Ladite face de sortie 7 du guide de répartition 5 et la face elliptique de ladite partie intermédiaire 13 présentent une arête commune, située ici dans le plan de séparation 15.

La lumière se propageant dans le guide de répartition 5 est ainsi diffusée vers l'extérieur dudit guide de répartition 5, du même côté que le faisceau 12 sortant du guide d'orientation 3. Ainsi, les deux types d'éclairage sont utilisés simultanément pour éclairer sensiblement dans une même direction.

## Revendications

1. Dispositif d'éclairage et/ou de signalisation (1), notamment pour véhicule automobile, comprenant une source lumineuse (S) configurée pour émettre un faisceau lumineux, un guide d'orientation (3) du faisceau de lumière provenant de la source lumineuse (S), un guide de répartition (5) apte à répartir la lumière issue dudit guide d'orientation (3) en dehors du dispositif (1), ledit dispositif (1) étant configuré pour que le guide d'orientation (3) émette une première partie (11) du faisceau dans le guide de répartition (5), et une deuxième partie (12) du faisceau en dehors du guide de répartition (5),
**caractérisé en ce que** les guides d'orientation (3) et de répartition (5) sont dans le prolongement optique l'un de l'autre et font un angle.

2. Dispositif d'éclairage ou de signalisation selon la revendication 1 précédentes, dans lequel ledit guide d'orientation (3) et ledit guide de répartition (5) sont en continuité de matière l'un de l'autre.

3. Dispositif d'éclairage et/ou de signalisation selon l'une quelconque des revendications précédentes, dans lequel ledit guide d'orientation (3) comprend une face de sortie configurée pour émettre lesdites première (11) et deuxième (12) parties du faisceau et dans lequel une face d'entrée (6) du guide de répartition (5) correspond à une partie de ladite face de sortie.

4. Dispositif d'éclairage et/ou de signalisation selon la revendication 3, dans lequel ledit guide d'orientation (3) comprend une partie intermédiaire (13) raccordant le guide d'orientation (3) au guide de répartition (5) et présentant ladite face de sortie.

5. Dispositif d'éclairage et/ou de signalisation selon la revendication 4, dans lequel la partie intermédiaire (13) est un cylindre dont le profil de section a un premier côté (14) convexe et un deuxième côté en forme de prisme (16) s'élargissant, puis d'arc (17) en ellipse, ledit premier côté (14) dirigeant ladite première partie (11) du faisceau vers ladite face d'entrée (6) du guide de répartition (5) et/ou le deuxième côté permettant l'émission de la deuxième partie (12) du faisceau en dehors du dispositif (1).

6. Dispositif d'éclairage et/ou de signalisation selon l'une quelconque des revendications 3 à 5, dans lequel ledit guide d'orientation (3) comprend une face d'entrée (2) des rayons lumineux et/ou un bord arrière (4) de forme courbe convexe, ledit bord arrière (4) étant configuré pour réfléchir lesdits rayons lumineux issus de la face d'entrée (2), vers la face de sortie.

7. Dispositif d'éclairage et/ou de signalisation selon la revendication 6, dans lequel ledit bord arrière (4) a une forme parabolique.

8. Dispositif d'éclairage et/ou de signalisation selon la revendication 6 ou 7, dans lequel ladite source lumineuse (S) est une diode électroluminescente disposée sensiblement sur ladite face d'entrée (2).

9. Dispositif d'éclairage et/ou de signalisation selon l'une quelconque des revendications précédentes, dans lequel le guide d'orientation (3) est muni d'un axe optique (Ox), ledit guide d'orientation (3) étant apte à diriger lesdits rayons lumineux émis par la source lumineuse (S) dans un plan sensiblement parallèle au dit axe optique.

10. Dispositif d'éclairage et/ou de signalisation selon l'une quelconque des revendications précédentes, dans lequel le guide de répartition (5) comprend une face de répartition (9) munie d'une pluralité de motifs (10).

11. Dispositif d'éclairage et/ou de signalisation selon la revendication 1, dans lequel le guide de répartition (5) comprend une face de sortie (7) des rayons répartis par ladite face de répartition (9).

12. Dispositif d'éclairage et/ou de signalisation selon la revendication 10 ou 11, dans lequel les motifs (10) sont des altérations superficielles de la face de (9).

13. Dispositif d'éclairage et/ou de signalisation selon la revendication 10 ou la revendication 11, dans lequel les motifs (10) sont des éléments de surfaces réfléchissantes formés sur la face de répartition (9), obtenus par moulage ou par usinage.

14. Dispositif d'éclairage et/ou de signalisation selon l'une, quelconque, des revendications précédentes, dans lequel les guides d'orientation (3) et de répartition (5) sont des guides surfaciques, formant une nappe.
